# EUROPEAN PATENT APPLICATION

(11) **EP 4 468 717 A1**
(43) Date of publication of application: **27.11.2024**
(21) Application number: 23829874.9
(22) Date of filing: 06.06.2023
(51) Int. Cl.: H04N 21/431, H04N 21/472, H04N 21/478, G06F 16/73, G06F 16/738

(54) **VIDEO INTERACTION METHOD AND APPARATUS, ELECTRONIC DEVICE AND STORAGE MEDIUM**

(30) Priority: 29.06.2022 CN 202210785289
(71) Applicant: Beijing Zitiao Network Technology Co., Ltd., Beijing 100190 (CN)
(72) Inventor: PENG, Cong, Beijing 100028 (CN); JIAN, Jingtong, Beijing 100028 (CN); ZHANG, Wenshu, Beijing 100028 (CN); GUO, Yao, Beijing 100028 (CN)
(74) Representative: Dentons UK and Middle East LLP
(86) International application number: PCT/CN2023/098529
(87) International publication number: WO 2024/001690

(57) **Abstract**

Embodiments of the present disclosure provide a method and an apparatus for video interaction, an electronic device and a storage medium. The method includes: in response to a recommendation video for a target application software being played to a preset time point, displaying a first interaction panel in a video playback page, wherein the first interaction panel includes a first area, and a target game is displayed in the first area; displaying a detail page of the target application software in response to a page displaying operation acting within the interaction panel, wherein the interaction panel includes the first interaction panel; and downloading the target application software in response to a downloading operation acting within the detail page.

## Description

This application claims priority to Chinese Patent Application No. 202210785289.7, filed June 29, 2022, the entire contents of which are incorporated herein by reference.

### FIELD

Embodiments of the present disclosure relate to the field of computer technologies, and, in particular, to a method and apparatus for video interaction, an electronic device, and a storage medium.

### BACKGROUND

Users may watch a recommendation video for an application software, and may switch to the detail page of the application software through a series of operations to download the application software.

However, the switching process of switching from a video playback page to the detail page of the application software is cumbersome and the switching manner is relatively simple, which cannot meet the requirements of users.

### SUMMARY

The embodiment of the present disclosure provides a method and an apparatus for video interaction, an electronic device and a storage medium.

According to a first aspect, an embodiment of the present disclosure provides a method for video interaction, including:
in response to that a recommendation video for a target application software is played to a preset time point, displaying a first interaction panel in a video playback page, wherein the first interaction panel includes a first area, and a target game is displayed in the first area;
in response to a page displaying operation acting within an interaction panel, displaying a detail page of the target application software, the interaction panel comprising the first interaction panel; and
in response to a downloading operation acting within the detail page, downloading the target application software.

According to a second aspect, an embodiment of the present disclosure further provides an apparatus for video interaction, including:
a panel displaying module configured to display, in response to that a recommendation video for a target application software is played to a preset time point, a first interaction panel in a video playback page, wherein the first interaction panel includes a first area, and a target game is displayed in the first area;
a page displaying module configured to display, in response to a page displaying operation acting within an interaction panel, a detail page of the target application software, the interaction panel comprising the first interaction panel; and
a downloading module configured to download the target application software in response to a downloading operation acting within the detail page.

According to a third aspect, an embodiment of the present disclosure further provides an electronic device, including:
one or more processors; and
a memory configured to store one or more programs, wherein when executed by the one or more processors, the one or more programs causes the one or more processors to implement the method for video interaction according to the embodiments of the present disclosure.

According to a fourth aspect, an embodiment of the present disclosure further provides a computer-readable storage medium having a computer program stored thereon, the program, when executed by a processor, implements the method for video interaction according to the embodiments of the present disclosure.

### BRIEF DESCRIPTION OF DRAWINGS

Throughout the drawings, the same or similar reference numbers refer to the same or similar elements. It shall be understood that the drawings are illustrative, and components and elements are not necessarily drawn to scale.
FIG. 1 is a schematic flowchart illustrating a method for video interaction according to an embodiment of the present disclosure;
FIG. 2 is a schematic diagram illustrating a display of a first interaction panel according to an embodiment of the present disclosure;
FIG. 3 is a schematic flowchart illustrating another method for video interaction according to an embodiment of the present disclosure;
FIG. 4 is a schematic diagram illustrating a display of a to-be-collected object according to an embodiment of the present disclosure;
FIG. 5 is a schematic diagram illustrating a display of a detail page according to an embodiment of the present disclosure;
FIG. 6 is a schematic diagram illustrating a display of a second interaction panel according to an embodiment of the present disclosure;
FIG. 7 is a schematic diagram illustrating another display of a second interaction panel according to an embodiment of the present disclosure;
FIG. 8 is a structural block diagram illustrating an apparatus for video interaction according to an embodiment of the present disclosure;
FIG. 9 is a schematic structural diagram illustrating an electronic device according to an embodiment of the present disclosure.

### DETAILED DESCRIPTION

Embodiments of the present disclosure will be described below with reference to the accompanying drawings. While certain embodiments of the present disclosure are shown in the drawings, it shall be understood that the present disclosure may be implemented in various forms, and should not be construed as limited to the embodiments set forth herein. On the contrary, these embodiments are provided for a more thorough and complete understanding of the present disclosure. It shall be understood that the drawings and embodiments of the present disclosure are provided for illustrative purposes only and are not intended to limit the scope of protection of the present disclosure.

It shall be understood that the various steps described in the method implementation of this disclosure can be executed in different orders and/or in parallel. In addition, the method implementation can include additional steps and/or the steps as shown may be omitted. The scope of this disclosure is not limited in this regard.

The term "including" and its variations as used herein are non-exclusive inclusion, i.e. "including but not limited to". The term "based on" means "at least partially based on". The term "one embodiment" indicates "at least one embodiment"; the term "another embodiment" indicates "at least one additional embodiment"; and the term "some embodiments" indicates "at least some embodiments". Relevant definitions of other terms will be given in the following description.

It should be noted that the concepts of "first" and "second" mentioned in this disclosure are only used to distinguish different devices, modules, or units, but are not used to limit the order or interdependence of the functions performed by these devices, modules, or units.

It should be noted that the modifications of "one" and " a plurality of " mentioned in this disclosure are illustrative but not limiting. Those skilled in the art should understand that unless otherwise indicated in the context, they should be understood as "one or more".

The names of messages or information interaction between multiple devices in embodiments of the present disclosure are described for illustrative purposes only and are not intended to limit the scope of such messages or information.

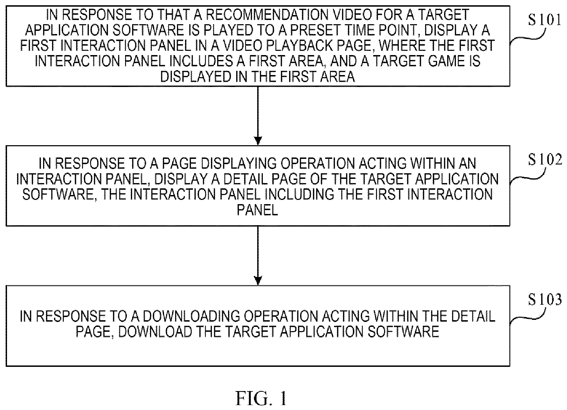

FIG. 1 is a schematic flowchart illustrating a method for video interaction according to an embodiment of the present disclosure. The method may be performed by an apparatus for video interaction, and the apparatus may be implemented by software and/or hardware, and may be configured in an electronic device, for example, may be configured in a mobile phone or a tablet computer. The method for video interaction provided by the embodiment of the present disclosure may switch a video playback page to a detail page of the application software for downloading the application software. As shown in FIG. 1, the method for video interaction provided in this embodiment may include the following steps.

At S101, when the recommendation video for the target application software is played to a preset time point, a first interaction panel is displayed in a video playback page, where the first interaction panel includes a first area, and a target game is displayed in the first area.

The recommendation video may be a video for recommending application software to the user, that is, a video for recommending the user to download, install, and use the application software, such as an introduction video for the application software. The recommendation video may be located within a video stream of a video playback page, and correspondingly, the user may watch each video including the recommendation video in the video playback page based on the video stream of the video playback page. The target application software may be understood as application software recommended by the recommendation video. The preset time point may be a time point for displaying the first interaction panel, which may be a set video point in the recommendation video; or may be a point corresponding to a set playback duration, for example, the set playback duration may be a time length such as 3s or 5s, so that when the playback duration of the recommendation video reaches the set playback duration, it may be determined that the recommendation video is played to the preset time point.

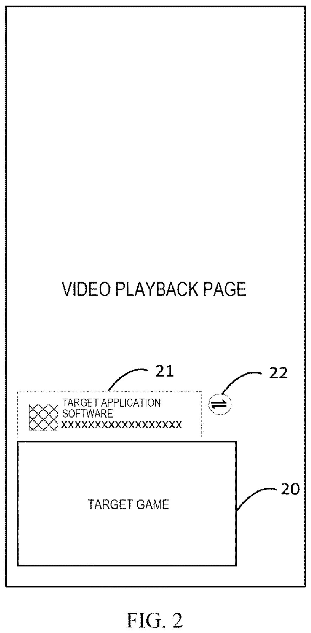

The first interaction panel may be a panel displayed with an interactive game for the user to interaction. Correspondingly, the target game may be understood as an interactive game displayed in the first interaction panel. As shown in FIG. 2, the first interaction panel may include a first area 20 in which a target game may be displayed, so that a user may perform interaction by playing the target game. The target game may be, for example, a game of opening a box, a game of flipping a card, a game of rotating a turntable, and the like, and the game content of the target game is not limited in this embodiment.

In addition, referring to FIG. 2, the first interaction panel may further include a second area 21, and the second area 21 may be configured to display software information of the target application software, for example, a software icon, a software name, and/or introduction information of the target application software, and may be further configured to display prompt information for prompting the user to play the target game, and the user may perform a page displaying operation (for example, a second page displaying operation) by trigger the second area 21, to switch into a detail page of the target application software. For example, the first interaction panel further includes a second area 21, and the second area 21 is configured to trigger to perform the second page displaying operation.

For example, when a triggering operation for instructing to play the recommendation video for the target application software is received, the recommendation video for the target application software may be played in the video playback page. When the recommendation video is played to the preset time point, the first interaction panel is displayed in the video playback page. The target game is displayed in the first area of the first interaction panel, the software information of the target application software is displayed in the second area of the first interaction panel, and the display of the recommendation video for the target application software can be kept when the first interaction panel is displayed, so that the user interacts with the target game while watching the recommendation video, which improves the user experience.

S102, in response to a page displaying operation acting within the interaction panel, a detail page of the target application software is displayed, where the interaction panel includes the first interaction panel.

The page displaying operation may be a triggering operation for instructing to display a detail page of the target application software, which may act within the interaction panel. The interaction panel may include, for example, a first interaction panel and/or a second interaction panel. For example, the page displaying operation may include a first page displaying operation and/or a second page displaying operation.

For example, the user may perform a page displaying operation in the interaction panel, for example, perform a first page displaying operation in the first interaction panel, or perform a second page displaying operation in the first interaction panel or the second interaction panel. Correspondingly, when receiving the page displaying operation from the user, the electronic device may display the detail page of the target application software in response to the page displaying operation, so that the user views detail information of the target application software and/or downloads the target application software in the detail page.

In this embodiment, when the recommendation video for the target application software is played to a preset time node, a target game is displayed in the first interaction panel, and when the user performs the page displaying operation in the interaction panel (for example, the first interaction panel), the detail page of the target application software is displayed, so that the user can switch into the detail page of the target application software through the first interaction panel with a target game displayed therein, thus triggering operation does not need to be performed repeatedly, the operations required for switching to the detail page of the target application software can be simplified, the switching manner for the detail page of the target application software is enriched, and the user experience is improved.

In an implementation, the user may switch into the detail page of the target application software by performing the second page displaying operation. For example, the second page switching operation may include an operation of triggering a second area of the first interaction panel, an operation of triggering a detail control displayed in the second interaction panel, or an operation of triggering a fourth area of the second interaction panel; and the second page switching operation may further include: an operation of sliding in a set direction in the video playback page or the first interaction panel/the second interaction panel when the first interaction panel/the second interaction panel is displayed, such as an operation of sliding leftward in the video playback page or the first interaction panel/the second interaction panel, and the like. For example, the page displaying operation includes a second page displaying operation, and displaying the detail page of the target application software includes: switching a current page from the video playback page to the detail page of the target application software. When the first page displaying operation and the second page displaying operation are received, the switching manner of switching into the detail page of the target application software and/or the display manner of the detail page may be the same or different, for example, they may be different, thereby the switching manner and the display manner for the detail page are enriched.

S103, in response to a downloading operation acting within the detail page, the target application software is downloaded.

The downloading operation may be understood as a triggering operation for instructing to download a target application software, for example, an operation of triggering a download control displayed in the detail page or an operation of collecting a to-be-collected object corresponding to the target application software in a detail page of the target application software. The to-be-collected object may be an object related to the target application software, for example, a virtual item or a non-virtual item related to the target application software, and the like, and the virtual item may be, for example, a prop, a coupon, a points voucher, or points that can be used in the target application software.

For example, when the user wants to download the target application software or when the user wants to collect the to-be-collected object corresponding to the target application software, the user may perform the downloading operation in the detail page. Correspondingly, when detecting the downloading operation of the user, the electronic device may download the target application software, for example, the electronic device may obtain resource package of the target application software from the server, and install or prompt the user to install the target application software after the download is completed.

In addition, when the downloading operation is received, or after the target application software is downloaded or installed, the to-be-collected object corresponding to the target application software may be provided to the user, for example, the to-be-collected object is provided to the account of the user for use by the user.

It may be understood that, if the user has installed a target application software, that is, if the electronic device is already installed with an application software, the download control may not be displayed in the detail page, or when the downloading operation of the user in the detail page is received, the operation of downloading the target application software is not performed, for example, the target application software may be directly started for use by the user. In addition, if the electronic device has downloaded the target application software but has not installed the target application software, the download control may not be displayed in the detail page, or when the downloading operation of the user in the detail page is received, the operation of downloading the target application software is not performed, for example, the user may install or be prompted to install the target application software. This embodiment does not limit the situation that the user downloads or installs the target application software.

According to the method for video interaction provided by the embodiment, when the recommendation video for the target application software is played to the preset time point, the first interaction panel is displayed in the video playback page, where the first interaction panel includes a first area, and a target game is displayed in the first area; in response to a page displaying operation acting within the interaction panel, a detail page of the target application software is displayed, and the interaction panel includes a first interaction panel; and in response to a downloading operation acting within the detail page, the target application software is downloaded. In this embodiment, the interactive game is displayed in the interaction panel, and when it is detected that the user performs the page displaying operation in the interaction panel, the detail page of the application software is displayed, so that the user can download the application software through switching the interaction panel of the target game into the detail page of the application software. Thus, the operations required for switching to the detail page of the application software can be simplified, and the switching manners for the detail page of the application software are enriched, thus improving the user experience.

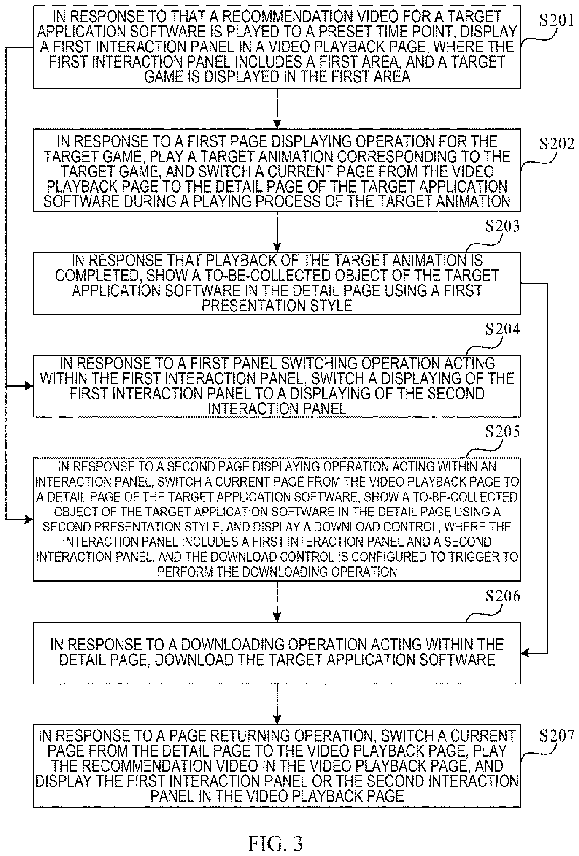

FIG. 3 is a schematic flowchart illustrating another method for video interaction according to an embodiment of the present disclosure. This embodiment may be combined with one or more examples in the above embodiments. For example, the page displaying operation includes a first page displaying operation for the target game, and displaying the detail page of the target application software includes: playing a target animation corresponding to the target game, and switching a current page from the video playback page to a detail page of the target application software in a process of playing the target animation.

For another example, the method for video interaction provided in this embodiment further includes: when the playback of the target animation is completed, showing a to-be-collected object of the target application software in the detail page by using a first presentation style.

For another example, switching the current page from the video playback page to the detail page of the target application software includes: switching the current page from the video playback page to the detail page of the target application software, showing a to-be-collected object of the target application software in the detail page by using a second presentation style, and displaying a download control, wherein the download control is configured to trigger to perform the downloading operation.

For another example, the interaction panel further includes a second interaction panel, and the method further includes: after the displaying the first interaction panel in the video playback page, in response to a first panel switching operation acting within the first interaction panel, switching display of the first interaction panel to display of the second interaction panel.

For another example, the method further includes: after displaying the detail page of the target application software, switching, in response to a page returning operation, a current page from the detail page to the video playback page, playing the recommendation video in the video playback page, and displaying the first interaction panel or the second interaction panel in the video playback page.

Correspondingly, as shown in FIG. 3, the method for video interaction provided in this embodiment may include:
At S201, when the recommendation video for the target application software is played to a preset time point, a first interaction panel is displayed in the video playback page, and S202, S204 or S205 are performed, where the first interaction panel includes a first area, and a target game is displayed in the first area.

Taking a game of triggering a box as an example of the target game, when the recommendation video for the target application software is played to the preset time point, the first interaction panel may be displayed, and at least two interaction objects (such as boxes) may be displayed in a first area of the first interaction panel; meanwhile, the target object (such as a small ball, etc.) of the target game may be controlled to appear at a first position of the first interaction panel (for example, at a display position of a software icon for the target application software in a second area of the first interaction panel), move along a preset track to the interaction object displayed at the second position (for example, a middle position of the second area) of the first interaction panel, and after moving to the second position, the target object is stopped to be displayed, to present a visual effect of the target object falling within the interaction object.

In addition, before and/or after the target object moves to the second position, the at least two interaction objects may be periodically controlled to exchange positions. When the target object moves to the second position, the preset sound effect indicating that the target object falls within the interaction object may also be played, and/or, the content and/or the presentation style of the prompt information displayed in the second area may be switched. When the first interaction panel is displayed at the time the recommendation video for the target application software is played to the preset time point, the preset prompt audio may also be played to prompt the user to interact through the target game.

At S202, in response to a first page displaying operation for the target game, a target animation corresponding to the target game is played, and a current page is switched from the video playback page to a detail page of the target application software in a process of playing the target animation.

The first page displaying operation may be an operation of playing a target game by the user, for example, an operation of triggering an interactive object (such as a box, a card, or a turntable) in the target game. The target animation may be understood as a feedback animation for an operation of the user triggering the interactive object in the target game, which may be an animation corresponding to the target game, for example, may be an animation corresponding to the target game and the target application software. Taking the game of triggering the box as an example of the target game, in the target animation, the target interactive object triggered by the user (for example, the box triggered by the user) may gradually increase and move from the current position to the center position of the video playback page; after moving to the center position of the video playback page, the target interactive object rotates and gradually disappears, and meanwhile, the to-be-collected object gradually appears and gradually increases in size.

For example, the user may play the target game in the first interaction panel, for example, trigger an interactive object in the target game to open/flip the interactive object or control the interactive object to rotate. Correspondingly, when detecting that the user triggers the interactive object in the target game, that is, when detecting a triggering operation for the target game, it can be determined that the first page displaying operation is received. In response to the first page displaying operation, the recommendation video for the target application software is stopped to be played, the target animation corresponding to the target game is played, and in the process of playing the target animation, the current page is switched from the video playback page to the detail page of the target application software, so as to realize continuity of screen displayed when the video playback page is switched to the detail page of the target application software, thereby avoiding the situation that the screen change is too abrupt.

S203, in response to that playback of the target animation is completed, a to-be-collected object of the target application software is shown in the detail page by using a first presentation style, and S206 is performed.

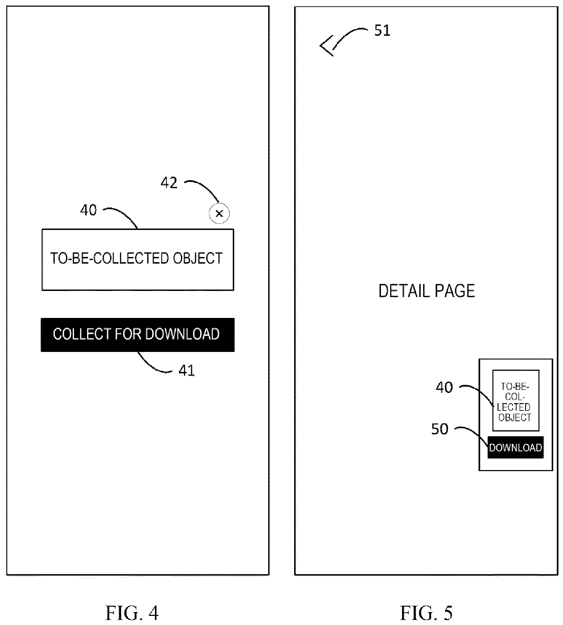

In this embodiment, after playback of the target animation is completed, the to-be-collected object 40 of the target application software may be shown in the detail page by using the first presentation style, as shown in FIG. 4, for the user to collect the to-be-collected object.

For example, in the target animation, as the target animation is played, the presentation style of the to-be-collected object may gradually be changed to the first presentation style, that is, in the last frame of the target animation, the to-be-collected object may be presented in the first presentation style. Therefore, after the playback of the target animation is completed, the to-be-collected object may continue to be shown in the first presentation style at the showing position of the to-be-collected object in the target animation.

In an implementation, after the to-be-collected object of the target application software is shown in the detail page of the target application software by using the first presentation style, the user may collect the to-be-collected object. For example, downloading the target application software in response to a downloading operation acting within the detail page includes: in response to a collecting operation for the to-be-collected object, downloading the target application software, and switching the to-be-collected object from the first presentation style to a second presentation style.

The downloading operation acting within the detail page may include a collecting operation for the to-be-collected object. The collecting operation may be an operation of collecting the to-be-collected object of the target application software, for example, an operation of triggering the collecting control displayed in the detail page.

For example, as shown in FIG. 4, when the to-be-collected object 40 of the target application software is shown in the detail page by using the first display style, a collecting control 41 for the to-be-collected object 40 may be displayed. Therefore, when the user wants to collect the to-be-collected object 40, the collecting control 41 may be triggered. Correspondingly, when detecting that the user triggers the collecting control 41 for the to-be-collected object 40, the electronic device may determine that the collecting operation for the to-be-collected object 40 is received, and download the target application software in response to the collecting operation, and switch the presentation style of the to-be-collected object 40 from the first presentation style to the second presentation style. In addition, in response to the collecting operation, the to-be-collected object 40 is moved to one side of the detail page of the target application software for showing, and the download progress of the target application software is displayed.

It may be understood that, when the collecting operation for the to-be-collected object is received, the display of the to-be-collected object may also be canceled, which is not limited in this embodiment.

In an implementation, after the to-be-collected object of the target application software is shown in the detail page of the target application software by using the first presentation style, the user may also instruct the electronic device to stop showing the to-be-collected object in the first presentation style, for example, switch the presentation style of the to-be-collected object from the first presentation style to the second presentation style. In this case, for example, the method further includes: after showing a to-be-collected object of the target application software in the detail page by using a first presentation style, in response to a style switching operation for the to-be-collected object, switching the to-be-collected object from the first presentation style to a second presentation style, and displaying a download control, wherein the download control is configured to trigger to perform the downloading operation.

The style switching operation may be understood as a triggering operation for switching the presentation style of the to-be-collected object, which may be an operation for instructing the electronic device to stop showing the to-be-collected object in the first presentation style, for example, an operation of triggering a close control for the to-be-collected object.

For example, as shown in FIG. 4, when the to-be-collected object 40 of the target application software is shown in the detail page by using the first display style, a close control 42 for the to-be-collected object 40 may be displayed. Therefore, when the user wants to close the to-be-collected object 40 displayed in the first presentation style, the user may trigger the close control 42. Correspondingly, when detecting that the user triggers the close control 42 for the to-be-collected object 40, the electronic device may be determine that a style switching operation for the to-be-collected object 40 is received, in response to the style switching operation, the presentation style of the to-be-collected object 40 is switched from the first presentation style to the second presentation style, and in a process of the to-be-collected object 40 being switched from the first presentation style to the second presentation style, or before or after the presentation style of the to-be-collected object 40 is switched from the first presentation style to the second presentation style, the to-be-collected object 40 is moved to one side of the detail page of the target application software for showing, and a download control 50 for the target application software is displayed, as shown in FIG. 5. Thus, the user may perform the downloading operation by triggering the download control 50, to download the target application software.

S204, in response to a first panel switching operation acting within the first interaction panel, display of the first interaction panel is switched to display of the second interaction panel.

The first panel switching operation may be an operation of switching the interaction panel displayed in the video playback page from the first interaction panel to the second interaction panel, for example, an operation of triggering the switching control displayed in the first interaction panel.

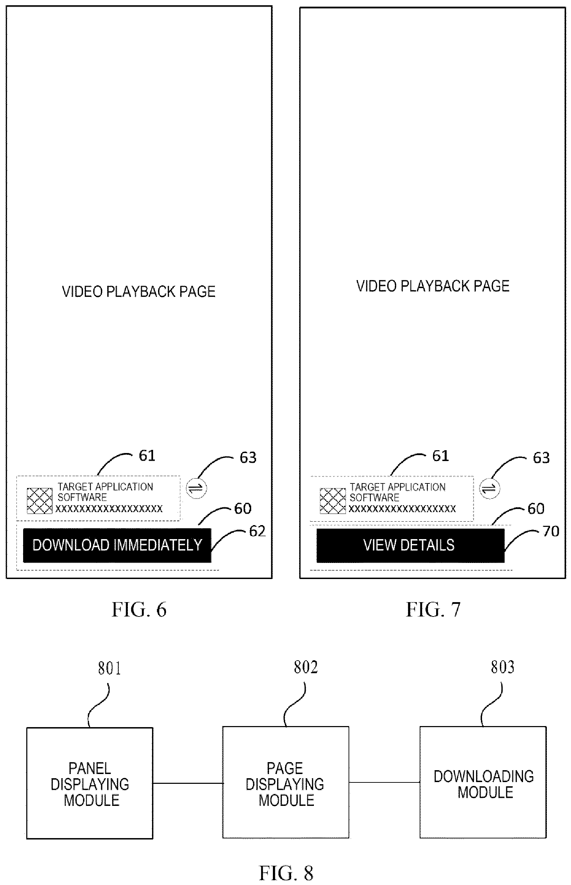

The second interaction panel may a panel for the user to trigger a download of the target application software or display the detail page of the target application software in using a manner other than interacting with the target game. As shown in FIG. 6 and FIG. 7, optionally, the second interaction panel includes a third area 60 and/or a fourth area 61, a target control is displayed in the third area 60, the target control is configured to trigger to perform the second page displaying operation or trigger to download the target application software, and the fourth area 61 is configured to trigger to perform the second page displaying operation. The third area 60 may be a display area of the target control, and the target control may include a download control 62 (as shown in FIG. 6) and/or a detail control 70 (as shown in FIG. 7). The download control 62 may be configured to trigger to download the target application software. The detail control 70 may be configured to trigger to display a detail page of the target application software. The fourth area 61 may be configured to display software information of the target application software, for example, a software icon, a software name, and/or introduction information of the target application software, etc., and prompt information for prompting the user to download the target application software may be further displayed, and the user may trigger the fourth area 61 to switch into the detail page of the target application software.

For example, when the first interaction panel is displayed, the switching control 22 may be displayed in the first interaction panel, as shown in FIG. 2. Therefore, when the user wants to switch the first interaction panel displayed in the video playback page, the switching control 22 displayed in the first interaction panel may be triggered. Correspondingly, when detecting that the user triggers the switching control 22 displayed in the first interaction panel, the electronic device may determine that a first panel switching operation is received, and in response to the first panel switching operation, switch display of the first interaction panel displayed in the video playback page to display of the second interaction panel, display the download control 62 and/or the detail control 70 in a third area 60 of the second interaction panel, and display software information of the target application software in the fourth area 61 of the second interaction panel, as shown in FIG. 6 and FIG. 7. Therefore, the user may download the target application software by triggering the download control 62 to, and perform the second page displaying operation by triggering the detail control 70 or trigger the fourth area 61.

In an implementation, the method further includes: after switching the first interaction panel to the second interaction panel, in response to a second panel switching operation acting within the second interaction panel, switching display of the second interaction panel to display of the first interaction panel.

The second panel switching operation may be an operation of switching the interaction panel displayed in the video playback page from the second interaction panel to the first interaction panel, for example, an operation of triggering the switching control displayed in the second interaction panel.

For example, when the second interaction panel is displayed, a switching control 63 may be displayed in the second interaction panel, as shown in FIG. 6 and FIG. 7. Therefore, when the user wants to review the first interaction panel, the user may trigger a switching control 63 displayed in the second interaction panel. Correspondingly, when detecting that the user triggers the switching control 63 displayed in the second interaction panel, the electronic device may determine that the second panel switching operation is received, and in response to the second panel switching operation, the electronic device may switch display of the second interaction panel displayed in the video playback page to display of the first interaction panel, as shown in FIG. 2.

In this embodiment, different interaction panels may be provided, and the panel displayed in the video playback page is switched based on a switching operation from the user, so that the user may directly download the target application software or switch into the detail page of the target application software using different manners as needed, thereby enriching the downloading manners of the target application software and the switching manners of the detail page, and improving the user experience.

S205, in response to a second page displaying operation acting within an interaction panel, a current page is switched from the video playback page to a detail page of the target application software, a to-be-collected object of the target application software is shown in the detail page by using a second presentation style, and a download control is displayed, where the interaction panel includes a first interaction panel and a second interaction panel, and the download control is configured to trigger to perform the downloading operation.

In this embodiment, when the second page displaying operation is received, the target animation may not be played, the current page is directly switched from the video playback page to the detail page of the target application software, and the to-be-collected object 40 of the target application software and the download control 50 are shown in the detail page by using the second presentation style, as shown in FIG. 5. Thus, the user may perform the downloading operation by triggering the download control 50 to download the target application software.

S206, in response to a downloading operation acting within the detail page, the target application software is downloaded.

S207, in response to a page returning operation, a current page is switched from the detail page to the video playback page, the recommendation video is played in the video playback page, and the first interaction panel or the second interaction panel is displayed in the video playback page.

The page returning operation may be a triggering operation for instructing to return to display the video playback page, that is, a triggering operation for instructing to switch the current page from the detail page of the target application software to the video playback page. The page returning operation may be, for example, an operation of triggering a returning control displayed in the detail page, or an operation of sliding in a preset direction in the detail page, for example, an operation of sliding rightward in the detail page, and the like.

For example, when the user wants to return the video playback page to watch the video, the user may perform a returning operation, for example, triggering a return control 51 (as shown in FIG. 5) displayed in the detail page, or sliding rightward in the detail page. Correspondingly, when receiving the returning operation from the user, the electronic device may switch the current page from the detail page to the video playback page, play the recommendation video in the video playback page, for example, play the recommendation video when taking the start position of the recommendation video or the playback progress of the target video before switching to the detail page as a playback starting point, and at the same time, display the first interaction panel or the second interaction panel in the video playback page.

In this embodiment, when the video playback page is displayed in response to the returning operation, the interaction panel displayed in the video playback page may be preset as the first interaction panel or the second interaction panel as needed. Alternatively, the interaction panel displayed in the video playback page when displaying the detail page in response to the returning operation may be determined based on the page displaying operation performed when switching into the detail page. For example, if the detail page is displayed in response to a first page displaying operation, that is, if the user has interacted with the target game displayed in the first interaction panel, the second interaction panel may be displayed in the video playback page when the returning operation is received; and if the detail page is displayed in response to the second page displaying operation, that is, if the user has not interacted with the target game displayed in the first interaction panel, the first interaction panel may be displayed in the video playback page when the returning operation is received, so that the user interacts with the target game displayed in the first interaction panel.

According to the method for video interaction provided by the embodiment, when different page displaying operations are received, different manners may be adopted to switch into the detail page, and different manners may be adopted to display the detail page. When the returning operation is received, the first interaction panel or the second interaction panel is displayed in the video playback page, thus the switching manners and the display manners of the detail page and the interaction panel displayed on the video playback page can be enriched, the requirements for diversified switching and interaction of the user are met, and the user experience is improved.

FIG. 8 is a structural block diagram illustrating a video interaction apparatus provided by an embodiment of the present disclosure. The apparatus may be implemented by software and/or hardware, and may be configured in an electronic device, for example, may be configured in a mobile phone or a tablet computer, and may display detail page of application software and download application software by performing the method for video interaction. As shown in FIG. 8, the video interaction apparatus provided in this embodiment may include: a panel displaying module 801, a page displaying module 802, and a downloading module 803.
the panel displaying module 801 is configured to display, in response to a recommendation video for a target application software being played to a preset time point, a first interaction panel in a video playback page, wherein the first interaction panel includes a first area, and a target game is displayed in the first area;

The page display module 802 is configured to display, in response to a page displaying operation acting within an interaction panel, a detail page of the target application software, the interaction panel comprising the first interaction panel.

The downloading module 803 is configured to download the target application software in response to a downloading operation acting within the detail page.

According to the apparatus for video interaction provided in this embodiment, when a recommendation video for a target application software being played to a preset time point, the panel display module displays the first interaction panel in the video playback page, where the first interaction panel includes a first area, and a target game is displayed in the first area; the page displaying module displays a detail page of the target application software in response to the page displaying operation acting within the interaction panel, where the interaction panel includes the first interaction panel; and the download module downloads the target application software in response to the downloading operation acting within the detail page. In this embodiment, the interactive game is displayed in the interaction panel, and when it is detected that the user performs the page displaying operation in the interaction panel, the detail page of the application software is displayed, so that the user can download the application software through switching the interaction panel of the target game into the detail page of the application software. Thus, the operations required for switching to the detail page of the application software can be simplified, and the switching manners for the detail page of the application software are enriched, thus improving the user experience.

In the foregoing embodiment, the page displaying operation may include a first page displaying operation for the target game, and the page displaying module 802 may be configured to: play a target animation corresponding to the target game, and switch a current page from the video playback page to the detail page of the target application software during a playing process of the target animation.

In the foregoing embodiment, the page displaying module 802 may be further configured to: in response to that playback of the target animation is completed, show a to-be-collected object of the target application software in the detail page by using a first presentation style.

In the above embodiment, the downloading module 803 may be configured to download the target application software, and switch the to-be-collected object from the first presentation style to a second presentation style, in response to a collecting operation for the to-be-collected object; or the apparatus for video interaction provided in this embodiment may further comprise: a style switching module configured to, after showing a to-be-collected object of the target application software in the detail page by using a first presentation style, in response to a style switching operation for the to-be-collected object, switch the to-be-collected object from the first presentation style to a second presentation style, and display a download control, wherein the download control is configured to trigger to perform the downloading operation.

In the above embodiment, the page displaying operation may include a second page displaying operation, and the page displaying module 802 may be configured to: switch a current page from the video playback page to the detail page of the target application software.

In the above embodiment, the page displaying module 802 may be configured to: switch the current page from the video playback page to the detail page of the target application software, show a to-be-collected object of the target application software in the detail page by using a second presentation style, and display a download control, wherein the download control is configured to trigger to perform the downloading operation.

In the foregoing embodiment, the first interaction panel may further include a second area, and the second area may be configured to trigger to perform the second page displaying operation.

In the foregoing embodiment, the interaction panel may further include a second interaction panel, and the apparatus for video interaction provided in this embodiment may further include: a first panel switching module configured to, after the displaying the first interaction panel in the video playback page, in response to a first panel switching operation acting within the first interaction panel, switching display of the first interaction panel to display of the second interaction panel.

In the foregoing embodiment, the second interaction panel may include at least one of a third area or a fourth area, a target control may be displayed in the third area, the target control may be configured to trigger to perform the second page displaying operation or configured to trigger to download the target application software; and the fourth area is configured to trigger to perform the second page displaying operation.

In an embodiment, the apparatus for video interaction provided in this embodiment may further include: a second panel switching module configured to, after switching the first interaction panel to the second interaction panel, in response to a second panel switching operation acting within the second interaction panel, switching display of the second interaction panel to display of the first interaction panel.

In an embodiment, the apparatus for video interaction provided in this embodiment may further include: a page returning module configured to, after displaying the detail page of the target application software, in response to a page returning operation, switching a current page from the detail page to the video playback page, playing the recommendation video in the video playback page, and displaying the first interaction panel or the second interaction panel in the video playback page.

The video interaction apparatus provided in the embodiments of the present disclosure may perform the method for video interaction provided by any embodiment of the present disclosure, and has functional modules and beneficial effects corresponding to the video interaction method. For technical details not described in detail in this embodiment, reference may be made to the method for video interaction provided by any embodiment of the present disclosure.

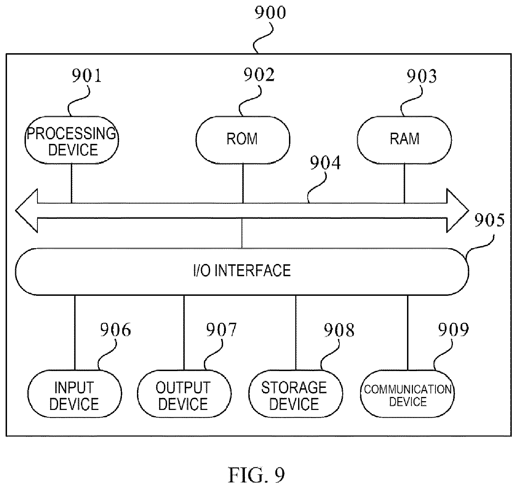

Referring to FIG. 9, it is a schematic structural diagram of an electronic device (for example, a terminal device) 900 suitable for implementing the embodiments of the present disclosure. The terminal device in the embodiments of the present disclosure may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital television (TV), a desktop computer, or the like. The electronic device shown in FIG. 9 is merely an example, which does not limit the function and scope of usage of the embodiments of the present disclosure.

As shown in FIG. 9, the electronic device 900 may include a processing device (for example, a central processing unit, a graphics processor, etc.) 901, which may perform various appropriate actions and processing according to a program stored in a read-only memory (ROM) 902 or a program loaded into a random-access memory (RAM) 903 from a storage device 908. In the RAM 903, various programs and data required by operation of the electronic device 900 are also stored. The processing device 901, the ROM 902, and the RAM 903 are connected to each other through a bus 904. An input/output (I/O) interface 905 is also connected to the bus 904.

Typically, the following devices can be connected to I/O interface 905: input devices 906 including, for example, touch screens, touchpads, keyboards, mice, cameras, microphones, accelerometers, gyroscopes, etc.; output devices 907 including liquid crystal displays (LCDs), speakers, vibrators, etc.; storage devices 908 including magnetic tapes, hard disks, etc.; and a communication device 909. The communication device 909 may allow the electronic device 900 to communicate with other devices wirelessly or wirelessly to exchange data. Although FIG. 9 shows an electronic device 900 with a plurality of devices, it shall be understood that it is not required to implement or have all the devices shown. More or fewer devices can be implemented or provided instead.

In particular, according to an embodiment of the present disclosure, the process described above with reference to the flowchart can be implemented as a computer software program. For example, an embodiment of the present disclosure includes a computer program product that includes a computer program carried on a non-transitory computer-readable medium, where the computer program includes program code for performing the method shown in the flowchart. In such an embodiment, the computer program can be downloaded and installed from a network through the communication device 909, or installed from the storage device 908, or installed from the ROM 902. When the computer program is executed by the processing device 901, the above functions defined in the method of the embodiment of the present disclosure are performed.

It should be noted that the computer-readable medium described above can be a computer-readable signal medium or a computer-readable storage medium, or any combination thereof. The computer-readable storage medium can be, for example, but not limited to, an electrical, magnetic, optical, electromagnetic, infrared, or semiconductor system, apparatus, or device, or any combination thereof. Examples of computer-readable storage media may include but are not limited to: an electrical connection with one or more wires, a portable computer disk, a hard disk, Random Access Memory (RAM), Read-Only Memory (ROM), an Erasable Programmable Read-Only Memory (EPROM) or flash memory, an optical fiber, a portable Compact Disk Read-Only Memory (CD-ROM), an optical storage device, a magnetic storage device, or any suitable combination thereof. In the present disclosure, a computer-readable storage medium may be any tangible medium containing or storing a program that can be used by an instruction execution system, apparatus, or device, or can be used in combination with an instruction execution system, apparatus, or device. In the present disclosure, a computer-readable signal medium can include a data signal propagated in baseband or as part of a carrier wave, which carries computer-readable program code therein. Such propagated data signals may take many forms, including but not limited to electromagnetic signals, optical signals, or any suitable combination thereof. A computer-readable signal medium may also be any computer-readable medium other than a computer-readable storage medium, which can send, propagate, or transmit programs for use by or in conjunction with instruction execution systems, apparatus, or devices. The program code contained on the computer-readable medium may be transmitted using any suitable medium, including but not limited to: wires, optical cables, radio frequency (RF), etc., or any suitable combination thereof.

In some embodiments, clients and servers can communicate using any currently known or future developed network protocol such as HTTP (Hypertext Transfer Protocol), and can be interconnected with any form or medium of digital data communication (such as communication networks). Examples of communication networks include Local Area Networks ("LANs"), Wide Area Networks ("WANs"), internetworks (such as the Internet), and end-to-end networks (such as ad hoc end-to-end networks), as well as any currently known or future developed networks.

The computer-readable medium can be included in the electronic device, or it can exist alone without being assembled into the electronic device.

The above-mentioned computer-readable medium carries one or more programs, and when the above-mentioned one or more programs are executed by the electronic device, the electronic device: in response to that a recommendation video for a target application software is played to a preset time point, display a first interaction panel in a video playback page, wherein the first interaction panel includes a first area, and a target game is displayed in the first area; in response to a page displaying operation acting within an interaction panel, display a detail page of the target application software, the interaction panel including the first interaction panel; and in response to a downloading operation acting within the detail page, download the target application software.

The storage medium may be a non-transitory storage medium.

Computer program codes for performing the operations of the present disclosure may be written in one or more programming languages or a combination thereof, including but not limited to Object Oriented programming languages - such as Java, Smalltalk, C++, and also conventional procedural programming languages - such as "C" or similar programming languages. The program code may be executed entirely on the user's computer, partially executed on the user's computer, executed as a standalone software package, partially executed on the user's computer and partially on a remote computer, or entirely on a remote computer or server. In the case of involving a remote computer, the remote computer may be any kind of network - including Local Area Network (LAN) or Wide Area Network (WAN) - connected to the user's computer, or may be connected to an external computer (e.g., through an Internet service provider to connect via the Internet).

The flowcharts and block diagrams in the accompanying drawings illustrate the architecture, functions, and operations of possible implementations of the system, method, and computer program product according to various embodiments of the present disclosure. In this regard, each block in a flowchart or block diagram may represent a module, program segment, or portion of code that contains one or more executable instructions for implementing a specified logical function. It should also be noted that in some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

The units described in the embodiments of the present disclosure may be implemented by means of software or hardware. The name of the module does not constitute a limitation on the unit itself in a certain case.

The functions described herein above can be performed at least in part by one or more hardware logic components. For example, without limitation, exemplary types of hardware logic components that may be used include: Field Programmable Gate Arrays (FPGAs), Application Specific Integrated Circuits (ASICs), Application Specific Standard Products (ASSPs), System on Chip (SOCs), Complex Programmable Logic Devices (CPLDs), and so on.

In the context of this disclosure, a machine-readable medium can be a tangible medium that may contain or store programs for use by or in conjunction with instruction execution systems, apparatuses, or devices. A machine-readable medium may be a machine-readable signal medium or a machine-readable storage medium. A machine-readable medium may include, but are not limited to, electronic, magnetic, optical, electromagnetic, infrared, or semiconductor systems, apparatuses, or devices, or any suitable combination thereof. Specific examples of the machine-readable storage medium may include electrical connections based on one or more wires, portable computer disks, hard disks, Random Access Memory (RAM), Read-Only Memory (ROM), an Erasable Programmable Read-Only Memory (EPROM) or flash memory, an optical fiber, a portable Compact Disk Read-Only Memory (CD-ROM), optical storage devices, magnetic storage devices, or any suitable combination thereof.

According to one or more embodiments of the present disclosure, an example 1 provides a video interaction method, including:
in response to a recommendation video for a target application software being played to a preset time point, displaying a first interaction panel in a video playback page, wherein the first interaction panel comprises a first area, and a target game is displayed in the first area;
in response to a page displaying operation acting within an interaction panel, displaying a detail page of the target application software, the interaction panel comprising the first interaction panel; and
in response to a downloading operation acting within the detail page, downloading the target application software.

According to one or more embodiments of the present disclosure, in an example 2 according to the method of the example 1, the page displaying operation includes a first page displaying operation for the target game, and displaying the detail page of the target application software includes:

playing a target animation corresponding to the target game, and switching a current page from the video playback page to the detail page of the target application software during a playing process of the target animation.

According to one or more embodiments of the present disclosure, in an example 3 according to the method of the example 2, the method further includes:

in response to that playback of the target animation is completed, showing a to-be-collected object of the target application software in the detail page by using a first presentation style.

According to one or more embodiments of the present disclosure, in an example 4 according to the method of the example 3, downloading the target application software in response to a downloading operation acting within the detail page includes:
in response to a collecting operation for the to-be-collected object, downloading the target application software, and switching the to-be-collected object from the first presentation style to a second presentation style; or
after showing a to-be-collected object of the target application software in the detail page by using a first presentation style, the method further includes:
in response to a style switching operation for the to-be-collected object, switching the to-be-collected object from the first presentation style to a second presentation style, and displaying a download control, wherein the download control is configured to trigger to perform the downloading operation.

According to one or more embodiments of the present disclosure, in an example 5 according to the method of the example 1, the page displaying operation includes a second page displaying operation, and displaying the detail page of the target application software includes:
switching a current page from the video playback page to the detail page of the target application software.

According to one or more embodiments of the present disclosure, in an example 6 according to the method of the example 5, switching the current page from the video playback page to the detail page of the target application software includes:
switching the current page from the video playback page to the detail page of the target application software, showing a to-be-collected object of the target application software in the detail page by using a second presentation style, and displaying a download control, wherein the download control is configured to trigger to perform the downloading operation.

According to one or more embodiments of the present disclosure, in an example 7 according to the method of the example 5, the first interaction panel further includes a second area, the second area being configured to trigger to perform the second page displaying operation.

According to one or more embodiments of the present disclosure, in an example 8 according to the method of the example 5, the interaction panel further includes a second interaction panel, the method further includes: after the displaying the first interaction panel in the video playback page,
in response to a first panel switching operation acting within the first interaction panel, switching display of the first interaction panel to display of the second interaction panel.

According to one or more embodiments of the present disclosure, in an example 9 according to the method of the example 8, the second interaction panel includes at least one of a third area or a fourth area, a target control is displayed in the third area, and the target control is configured to trigger to perform the second page displaying operation or configured to trigger to download the target application software; and the fourth area is configured to trigger to perform the second page displaying operation.

According to one or more embodiments of the present disclosure, in an example 10 according to the method of the example 8, the method further includes: after switching the first interaction panel to the second interaction panel,
in response to a second panel switching operation acting within the second interaction panel, switching display of the second interaction panel to display of the first interaction panel.

According to one or more embodiments of the present disclosure, in an example 11 according to the method of any one of the examples 1-10, the method further includes:
in response to a page returning operation, switching a current page from the detail page to the video playback page, playing the recommendation video in the video playback page, and displaying the first interaction panel or the second interaction panel in the video playback page.

According to one or more embodiments of the present disclosure, an example 12 provides an apparatus for video interaction, including:
a panel displaying module configured to display, in response to a recommendation video for a target application software being played to a preset time point, a first interaction panel in a video playback page, wherein the first interaction panel includes a first area, and a target game is displayed in the first area;
a page displaying module configured to display, in response to a page displaying operation acting within an interaction panel, a detail page of the target application software, the interaction panel comprising the first interaction panel; and
a downloading module configured to download the target application software in response to a downloading operation acting within the detail page.

According to one or more embodiments of the present disclosure, an example 13 provides an electronic device, including:
one or more processors;
a memory, configured to store one or more programs,
when executed by the one or more processors, the one or more programs causes the one or more processors to implement the method for video interaction according to any one of examples 1-11.

According to one or more embodiments of the present disclosure, an example 14 provides a computer-readable storage medium having stored thereon a computer program, which when executed by a processor, implements the method for video interaction according to any one of examples 1-11.

The above description is only embodiments of this disclosure and an explanation of the technical principles used. Those skilled in the art should understand that the scope of the disclosure involved in this disclosure is not limited to technical solutions composed of specific combinations of the above technical features, but should also covers other technical solutions formed by arbitrary combinations of the above technical features or their equivalent features without departing from the above disclosure concept. For example, technical solutions formed by replacing the above features with (but not limited to) technical features with similar functions disclosed in this disclosure.

In addition, although a plurality of operations are depicted in a specific order, this should not be understood as requiring these operations to be performed in the specific order shown or in a sequential order. In certain environments, multitasking and parallel processing may be advantageous. Similarly, although a plurality of implementation details are included in the above discussion, these should not be construed as limiting the scope of the present disclosure. Some features described in the context of individual embodiments can also be implemented in combination in a single embodiment. Conversely, a plurality of features described in the context of a single embodiment can also be implemented during a plurality of embodiments separately or in any suitable sub-combination.

Although the subject matter has been described in language specific to structural features and/or methodological logical actions, it shall be understood that the subject matter defined in the appended claims is not necessarily limited to the specific features or actions described above. On the contrary, the specific features and actions described above are merely example forms of implementing the claims.

## Claims

1. A method for video interaction, comprising:
in response to that a recommendation video for a target application software is played to a preset time point, displaying a first interaction panel in a video playback page, wherein the first interaction panel comprises a first area, and a target game is displayed in the first area;
in response to a page displaying operation acting within an interaction panel, displaying a detail page of the target application software, the interaction panel cosmprising the first interaction panel; and
in response to a downloading operation acting within the detail page, downloading the target application software.

2. The method of claim 1, wherein the page displaying operation comprises a first page displaying operation for the target game, and displaying the detail page of the target application software comprises:
playing a target animation corresponding to the target game, and switching a current page from the video playback page to the detail page of the target application software during a playing process of the target animation.

3. The method of claim 2, further comprising:
in response to that playback of the target animation is completed, showing a to-be-collected object of the target application software in the detail page using a first presentation style.

4. The method of claim 3, wherein downloading the target application software in response to a downloading operation acting within the detail page comprises:
in response to a collecting operation for the to-be-collected object, downloading the target application software, and switching the to-be-collected object from the first presentation style to a second presentation style.

5. The method of claim 3 or 4, further comprising: after showing a to-be-collected object of the target application software in the detail page using a first presentation style,
in response to a style switching operation for the to-be-collected object, switching the to-be-collected object from the first presentation style to a second presentation style, and displaying a download control, wherein the download control is configured to trigger to perform the downloading operation.

6. The method of claim 1, wherein the page displaying operation comprises a second page displaying operation, and displaying the detail page of the target application software comprises:
switching a current page from the video playback page to the detail page of the target application software.

7. The method of claim 6, wherein switching the current page from the video playback page to the detail page of the target application software comprises:
switching the current page from the video playback page to the detail page of the target application software, showing a to-be-collected object of the target application software in the detail page using a second presentation style, and displaying a download control, wherein the download control is configured to trigger to perform the downloading operation.

8. The method of claim 6, wherein the first interaction panel further comprises a second area, the second area being configured to trigger to perform the second page displaying operation.

9. The method of claim 6, wherein the interaction panel further comprises a second interaction panel, and the method further comprises: after the displaying the first interaction panel in the video playback page,
in response to a first panel switching operation acting within the first interaction panel, switching display of the first interaction panel to display of the second interaction panel.

10. The method of claim 9, wherein the second interaction panel comprises at least one of a third area or a fourth area, a target control is displayed in the third area, and the target control is configured to trigger to perform the second page displaying operation or configured to trigger to download the target application software; and the fourth area is configured to trigger to perform the second page displaying operation.

11. The method of claim 9, further comprising: after switching the first interaction panel to the second interaction panel,
in response to a second panel switching operation acting within the second interaction panel, switching display of the second interaction panel to display of the first interaction panel.

12. The method of any one of claims 1-11, further comprising: after displaying the detail page of the target application software,
in response to a page returning operation, switching a current page from the detail page to the video playback page, playing the recommendation video in the video playback page, and displaying the first interaction panel or the second interaction panel in the video playback page.

13. A apparatus for video interaction, comprising:
a panel displaying module configured to display, in response to that a recommendation video for a target application software is played to a preset time point, a first interaction panel in a video playback page, wherein the first interaction panel includes a first area, and a target game is displayed in the first area;
a page displaying module configured to display, in response to a page displaying operation acting within an interaction panel, a detail page of the target application software, the interaction panel comprising the first interaction panel; and
a downloading module configured to download the target application software in response to a downloading operation acting within the detail page.

14. An electronic device, comprising: one or more processors; and a memory configured to store one or more programs, wherein when executed by the one or more processors, the one or more programs causes the one or more processors to implement the method for video interaction of any one of claims 1-12.

15. A computer-readable storage medium storing a computer program, wherein the computer program, when executed by a processor, implements the method for video interaction of any one of claims 1-12.
